# EUROPEAN PATENT SPECIFICATION

(11) **EP 1 929 716 B1**
(45) Date of publication and mention of the grant of the patent: **13.04.2016**
(21) Application number: 05774862.6
(22) Date of filing: 24.08.2005
(51) Int. Cl.: H04W 76/02

(54) **PRESERVED BEARERS**
ERHALTENDE TRÄGER
PORTEUSES CONSERVEES

(43) Date of publication of application: 11.06.2008
(73) Proprietor: Telefonaktiebolaget LM Ericsson (publ), 164 83 Stockholm (SE)
(72) Inventor: KOPPLIN, Dirk, S-442 54 Ytterby (SE); MATTSSON, Hans, S-517 37 Bollebygd (SE)
(74) Representative: Ericsson
(86) International application number: PCT/EP2005/009132
(87) International publication number: WO 2007/022791

(56) References cited:
- WO-A-2005/050917
- 3GPP: "MOBILE RADIO INTERFACE LAYER 3 SPECIFICATION; CORE NETWORK PROTOCOLS" TS 24.008 V7.0.0, [Online] June 2005 (2005-06), pages 209-227, XP002376984 Retrieved from the Internet: URL:http://www.3gpp.org/ftp/Specs/archive/ 24_series/24.008/24008-700.zip> [retrieved on 2006-04-13]
- SA2 (ERICSSON ET AL: "Removal of preservation procedure for realtime bearers in A/Gb mode", 3GPP DRAFT; 23060-491, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG SA, no. Phoenix, USA; 20040302, 2 March 2004 (2004-03-02), XP050201669, [retrieved on 2004-03-02]

## Description

### TECHNICAL FIELD

The invention relates to methods and systems for providing services to a mobile terminal using radio resources in a mobile communication network.

### BACKGROUND OF THE INVENTION

Today, with the advent of mobile communication networks of the third generation, where there is a migration from voice based mobile communication networks to packet based radio networks, like for example the UMTS network, the potential maximum bandwidth provided to the user is much higher than previously offered in radio networks of the second and second-and-a-half generation, such as in GSM or GPRS networks.
Naturally, the expanding of the available bandwidth has also resulted in the introduction of a whole new range of services provided from network operators to end-users. Many of these new services place stricter requirements than before on the mobile communication network in terms of time delay, connection stability, quality of service and other parameters defining the communication link between a mobile terminal and a core network. Since these end-user services are provided on radio bearers, the mobile communication network will especially need to gain control over radio bearer characteristics in order to optimize capacity usage and user satisfaction.

Some of the new services to be offered to the end-user shortly are Push-to-Talk, Streaming, IP-Telephony, WeShare, to name a few.

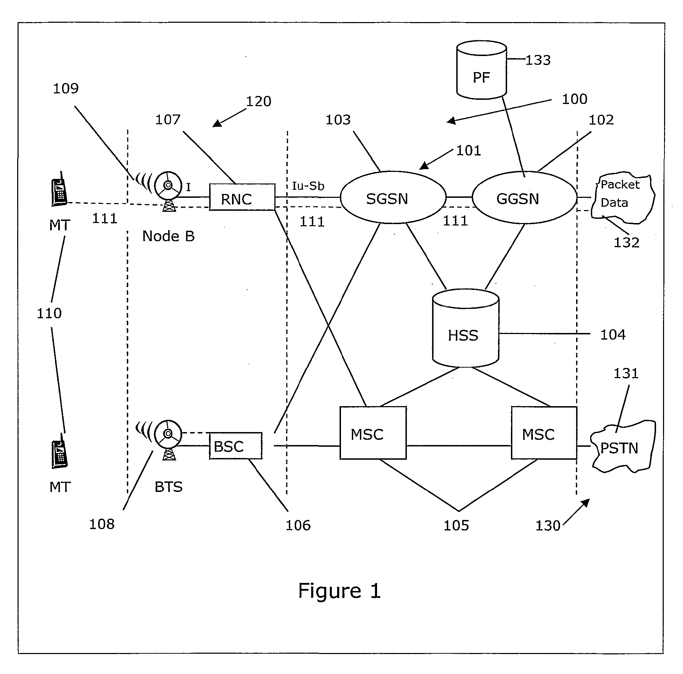

Such a typical mobile communication network of the third generation is schematically presented in figure 1.

A GGSN or Gateway GPRS Support Node has a function similar to an edge router in a packed data network and routes packets through the mobile communication network or from the mobile communication network to other networks which are connected to it. In the example shown in figure 1, the GGSN connects the radio network to a packet data network.

In addition, the GGSN tunnels data packets which are to be sent through the mobile communication network by establishing GTP-U tunnels (GTP- U - GPRS Tunnel Protocol - User).

SGSN's (Serving GPRS Support Node) main functions in the radio network are managing of mobile terminals in the network and performing of security and access functions. It participates in the setting up of radio resources to an end-user device, such as a mobile terminal in the form of RABs (Radio Access Bearers). The SGSN further detunnels data packets, which have been sent by the GGSN to the SGSN through a GTP-U tunnel and establishes a GTP-U tunnel for data packets, which are sent from for example a mobile terminal to a location outside the mobile communication network, for example a server in another packet data network. Also, the SGSN connects to an RNC (Radio Network Controller) via an lu-Sb interface.

An HSS is a conglomeration of different database functions in one, such as a HLR (Home Location Register) keeping track of the association between a home network and a mobile terminal, a DNS (Domain Name Server) responsible for looking up the IP-address of a plain text address and some security and network access databases.

An MSC (Mobile Switching Center) has mainly the function of a network switch or an exchange in the radio network with connections to location databases.

One other part of the radio network in figure 1 is a BSC (Base Station Controller) which is responsible for allocations of radio resource to a mobile terminal in the form of radio bearers, for handover of a mobile terminal (MT) from one base station to another and frequency administration. This controller is also present in mobile communications networks of the second and second and a half generation, such as GSM and GPRS networks.

Finally, the RNC (Radio Network Controller) handles the radio resources in its area. In contrast to the BSC, it can perform handover functions without involvement of other nodes in the radio network, such as and MSC and the SGSN.

When a mobile terminal requests a service from, for example, a server located in a packet data network outside the mobile communication network, it does so by sending a service request message to the SGSN.
Services provided from a packet switched network to a mobile terminal in a mobile communication network are provided on RABs (Radio Access Bearers).
In an example scenario, when a mobile terminal (MT) requests a service tied to a quality of service requirement, it first sends an activate PDP context request to the SGSN, which establishes contact with the GGSN by sending a Create PDP context request. When radio resources are released (RAB Release, suspend, etc) due to e.g. inactivity, out of coverage or due to a CS (Circuit-Switched) call, the RAB or Radio Access Bearer delivering the service is put into the preserved mode. The core network preserves streaming and conversational bearers by modifying bit rates (MBR, GBR) to zero in SGSN and GGSN. This would stop all downlink packets received at the GGSN from entering the Core Network. The mobile terminal is in charge of re-activation of preserved bearers by using so-called Modify PDP Context Request signaling. The exact procedure in such a case, for example in a UMTS network, is defined in the documents 3GPP TS 23.060 v3.3.0 and TS 24.008 v3.3.1.

In an always-connected scenario, such as when the mobile terminal is using the services of Push-to-Talk, streaming, IP-telephony or WeShare, the 3GPP definition may put unnecessary restriction in service handling leading to extended service re-initiation times. This, in turn, may become a hindrance when attracting potential users.
Especially applications expecting an always-connected IP transport will encounter problems when a streaming or a conversational bearer is used over a GPRS network.
In the event that a server located in a packet data network outside the mobile communication network is to unsolicitedly initiate a downlink transmission over a streaming or conversational bearer that is in a preserved state, the following steps are necessary:
1. The server informs the terminal over another bearer (interactive or background) that a downlink transmission is about to take place;
2. The terminal restores the preserved bearer using a PDP Context Modification procedure; and
3. The terminal informs the server that the bearer can be used for downlink transmissions.

Since the server does not know the bearer state, this hand-shake procedure is required each time a new downlink transmission takes place after some period of silence.

There are a number of disadvantages revealed by such a solution. First of all, the handshaking procedure is time-consuming. This introduces delays for usage of applications in the mobile network relying on small delays. Thus, when time becomes a critical issue for such an application, the set-up times for a new connection may not meet user expectations. In the worst case, because of time issues, there is a risk of the service offered from a server to the mobile terminal failing altogether.

Further, the requirement of hand-shake between the server and the mobile terminal for each new connection when the existing connection has been put into the preserved mode, adds complexity in both the terminal and the server. The added signaling between these two entities leads also to additional resource usage over the radio interface.

Finally, since according to the known procedure, the signalling between the server and the mobile terminal is performed on the application level, there is a risk of problems in the interoperability between mobile terminals and servers, because vendors of mobile terminals on the one hand and network service providers on the other hand may implement the above hand-shake procedure differently.

WO 2005/050917 discloses authorization and/or control of a service flow. A communication connection for the service flow is controlled when the service flow is terminated. For example, QoS attributes related to the communication connection are modified based on stored information representative of state before the establishment of the terminated service flow, Further related art is Tdoc S2-040888, "Removal of preservation procedure for realtime bearers in A/Gb mode (Ericsson, Siemens).

The present invention aims at solving at least a part of these problems and disadvantages with known solutions.

### SUMMARY OF THE INVENTION

The problem is solved by a method of providing services to a mobile terminal using radio resources in a mobile communication network according to claim 1.

The services provided to the mobile terminal can, for example, be time sensitive applications of the type Push-To-Talk, streaming applications, IP telephony or WeShare. An advantage of the inventive method for these services is that they do not need to be aware of the state of the radio resource.

In contemporary 3G and GPRS mobile communication networks, where the services above can be used, transmission of these services is done on Core Network resources (which typically are GTP-tunnels) through the Core Network, whereas the services are transmitted on radio resources, such as Radio Access Bearers (RABs), through the UTRAN (Universal Terrestrial Radio Access Netowrk) described above.

Thus, for 3G, GPRS and other networks where the above services can be used and which contain a Core Network-like structure, the steps a)-d) and f)-g) optinally include the additional step of performing the same action as for the radio resource also for a Core Network resource.

Step c) optinally also includes searching for a radio resource which potentially, but not necessarily, has to have the same destination address as the released radio resource. The alternative radio resource can have a different destination address in those cases where, for example, the mobile terminal has more than address,

Also, the destination address mentioned in step c) may be any kind of address that ties the radio and optionally Core Network resources to the mobile terminal, such as for instance a PDP address or an IP address. The temporary usage of another bearer with the same or different PDP address allows to forward packets without adding additional end-to-end delay.

The saving of traffic parameters for the released radio resource and the sending of subsequent data on a different radio resource has the advantage that the usual delay which follows with the radio resource preservation scenario is substantially avoided. Thus, the end-user of the time-sensitive application does not perceive a delay in service when the radio resource on which the service is delivered is released.

Optionally, the steps involving the handling of radio resources would, in a mobile communication network containing a Core Network-like structure, also include the same handling of Core Network resources as for radio resources.

Thus, while these steps follow the standard procedure for reestablishment of radio and, in mobile communication networks with a Core Network-like structure,Core Network resources, transmission of data to the mobile terminal is still ongoing. Therefore, loss of data is avoided.

Normally, in the process for looking for a different radio resource from the one whose parameters have been stored in the first node, a radio resource is sought which is not connected to a bearer descriptor. In UMTS networks, such bearer descriptors might be linked to a TFTs (Traffic Flow Templates). Of course, in other types of mobile communication networks, these bearer descriptors would be different.

Should a radio resource without a bearer descriptor not be found, it is possible to buffer or drop data coming from the server until the released radio and, optionally, Core Network resources are re-established again. Buffering of subsequent data directed to the mobile terminal is another way of avoiding data loss, which would be the case in the preserved state for the radio (and Core Network) resources. Even though dropping of packets would mean some loss of data for the mobile terminal, the shortening of the end-to-delay through the inventive radio (and Core Network) resource reestablishment procedure above would limit such data loss.

It should be pointed out that the inventive method described above could be realized in other types of mobile communication networks providing services where data and CS calls co-exist or resource reservation is dynamic, such as in GSM/GPRS networks, and is not only limited to third generation mobile communication networks, such as the UMTS.

The signalling terminology for the use of the inventive method in these other mobile communication networks would change accordingly.

In the case of the application of the method to a UMTS network, the services to a mobile terminal are provided on RABs (Radio Access Bearers). A RAB is linked to a PDP Context. When the PDP Context is set into the preserved mode in the inventive method in step a), the first node, which in the UMTS case is a GGSN (Gateway GPRS Support Node), saves the old QoS (Quality of Service) Profile.

The second mode, which in the UMTS case could be a SGSN (Serving GPRS Support Node), would in the inventive method normally receive a request from for example a GGSN in step e) for a logical association between the mobile terminal and the mobile communication network in the form of a PDP Context.

There are several other advantages with the inventive method worth mentioning. One advantage of the inventive method is that, since the signalling is done by the network, rather than by the mobile terminal, it allows the use of rather simple mobile terminals for use with services requiring an always-connected state of the mobile terminal.

The inventive method removes the need for application level signalling in radio resource preservation scenarios. This reduces the signalling overhead and application complexity. The method also removes the risk of multi-vendor interoperability problems, where such signalling procedures might incur.

In this fashion, compatibility issues between the different vendors of mobile terminals are resolved.

Further merits of the invention include advantages for operators, since services do not need to rely on specific terminal behaviour and service perception would not be entirely in the hands of terminals and applications. This is directly connected to the fact that the RAB reestablishment is initiated from the network rather than from the mobile terminal. In addition, since the signalling performed on levels lower than the application level, applications do not have to be aware of the bearer preservation procedure. Such signalling is delegated to a PLMN (Public Land Mobile Network) internal function for resource optimization.

In another aspect of the invention, there is provided a mobile communication network for providing services using radio resources to a mobile terminal according to claim 13.

The mobile communication network above is particularly suited to perform the method steps mentioned above.

In an embodiment of the mobile communication network mentioned above, the first node in the mobile communication network is specially adapted for re-enabling a bearer descriptor associated with said released radio resource.

In an alternative example of the mobile communication network, the first node is further adapted for buffering or dropping information for the released radio resource until the second node has re-established said released radio resource. This should be the case when the first node during the search for a radio resource with the same destination address as the preserved radio resource has only found logical associations between the mobile terminal and the mobile communication network which have a bearer descriptor.

In another example of the mobile communication network, the second node belonging to said mobile communication network is further adapted to send information and a request for a logical association to said mobile terminal as well as to receive an answer from said mobile terminal; said second node being further adapted to send a response to said request from said first node back to said first node

According to a third aspect of the invention, there is provided a node belonging to a mobile communication network for sending data to a mobile terminal on radio resources where the node is designed to store traffic parameters for a released radio resource and to receive subsequent data intended for the released radio resource; wherein the node is further adapted to search for a radio resource different from the released radio resource, but which has the same destination address as the released radio resource and to send all subsequent data intended for the released radio resource on the different radio resource.

According to one example of the node belonging to the mobile communication network, the node is specially adapted to send a request for a logical association between the mobile terminal and the mobile communication network together with an update of traffic parameters to another node belonging to said mobile communication network;

This would re-establish the radio resource formerly set into preserved state by the mobile communication network. The node above should then be able to forward all subsequent data on the re-established radio resource.

The node is particularly suited for performing the method steps as executed by the first node in the inventive method.

According to a fourth aspect of the invention, the problems and disadvantages with prior art are at least partially solved by a mobile terminal for use in a mobile communication network adapted to receive data from the mobile communication network on radio resources, characterized in that the mobile terminal is adapted to release the radio resource provided by the mobile communication network, to receive subsequent data on a radio resource different from the radio resource released, to receive a request for a logical association from a node belonging to a mobile communication network, to answer the request from the node and also to receive further subsequent data on a re-established radio resource.

In one embodiment of the invention, the mobile terminal can receive further subsequent data on a re-established radio resource which is the radio resource previously released by the mobile terminal.

Naturally, the mobile terminal is particularly suited for receiving services from the inventive mobile communication network and/or the node belonging to a mobile communication network as described above.

According to a fifth aspect of the invention, there is provided a computer program executable for providing services to a mobile terminal using radio resources in a mobile communication according to claim 14.

The computer program is, of course, particularly adapted to execute the steps defined by the inventive method above and all its different embodiments.

The invention will now be explained more in detail with the help of the accompanying figures.

### BRIEF DESCRIPTION OF THE DRAWINGS

- Figure 1: Figure 1 illustrates a schematic view of a typical third generation mobile communication network;
- Figure 2: shows an example of the inventive GGSN node in a mobile communication network;
- Figure 3: shows a signalling and payload scenario between the network and the mobile terminal when a non preserved PDP context to the same PDP address exists;
- Figure 4: shows a signalling and payload scenario between the network and the mobile terminal when all contexts to the same PDP address are preserved; and
- Figure 5: illustrates steps performed by a computer program implementing the method.

### DETAILED DESCRIPTION OF PREFERRED EMBODIMENTS

It is worth mentioning that the embodiments described below are to be seen as illustrative examples of the invention only and not as limitations thereof. The scope of the invention is rather defined by the accompanying claims.

Figure 1 illustrates in a schematic fashion a UMTS (Universal Mobile Telephony System) 100. An inventive mobile communication network will be explained with the help of this example UMTS network 100. Naturally, the invention could also be demonstrated on other example mobile communication networks which provide services on resources, such as radio bearers or radio channels, where the time delay factor is critical for the service and which are tied to some kind of QoS requirement, such as the GMS/GPRS networks, GSM/EDGE, CDMA2000, WCDMA, TD-SCDMA as well as wireless communication networks, such as networks adhering to the standards IEEE 802.11a, IEEE 802.11b, IEEE 802.11g and others

As can be seen from figure 1, the UMTS network 100 is connected to mobile terminals (MT) 110 on one side and with other data communication or circuit-switched networks 130, such as a Packet Data Network 132 and a PSTN (Packet Switched Telephone Network) 131 on the other. The part of the network handling both circuit-switched and packet-switched traffic is called the core network indicated as 101 in figure 1. The core network 101 is the interface between the UTRAN (UMTS Terrestrial Radio Access Network) 120 and other networks 130 mentioned above.

Typically, in a UMTS core network 101, the main components are the nodes GGSN (Gateway GPRS Support Node) 102 and SGSN (Serving GPRS Support Node) 103, the HSS (Home Subscriber System) 104 and the MSCs (Mobile Switching Centers) 105.

The GGSN acts as an edge router to networks 130 connected to the UMTS, in this case a Packet Data Network 132, such as the Internet. Its main task is to route traffic from the UTRAN 120 directed to networks outside the mobile communication network 100 and from networks outside the mobile communication network to the UTRAN.
The routing is done by examining headers of IP-packets arriving at the GGSN 102 from whatever direction and by setting up a GTP-U tunnel (GPRS Tunnel Protocol-User) through which that traffic is either forwarded to a SGSN 103 or, in case the traffic is to be directed towards networks outside the mobile communication network, to nodes outside the mobile communication network 100.
If the GTP-U tunnel has been set up previously, the I P-packets are simply forwarded to their destination (the SGSN 103) through the tunnel or out of the GTP-U tunnel to neighbouring networks,
The GGSN 102 also acts as a firewall and can perform billing together with packet inspection and classification.
It may also communicate with the HSS (Home Subscriber Service) 104 and PF (Policy Function) 133.

The HSS (Home Subscriber Service) 104 is a conglomeration of different database functions related to both the location of the subscriber in the home network as well translations of domain names into logical IP-addresses. These two functions are performed by an HLR (Home Location Register) and a DNS (Domain Name Service), which are not shown in figure 1. Apart from these functions, the HSS also provides database functionality related to security and access. In addition, a Policy Functions 133 can provide data specific to services. The data may be used for charging or Quality of Service, to give two examples.

SGSN's (Serving GPRS Support Node) 103 main functions in the UMTS network 100 are managing of mobile terminals in the network and performing of security and access functions. An SGSN 103 participates in the reservation of radio resources, which in the UMTS network 100 are provided on RABs (Radio Access Bearers) from the SGSN to the UTRAN. A further function of the SGSN 103 is switching of IP-packets sent by the GGSN node through a GTP-U tunnel and tunnelling of those IP-packets sent from a mobile terminal (MT) 110 to a network 130 outside the mobile communication network 100 through a GTP-U tunnel. Also, the SGSN is connected to RNCs (Radio Network Controllers) via an lu interface.

The two MSCs (Mobile Switching Centers) 105 in figure 1 normally work as switching centers or exchanges for traffic in the circuit-switched domain in the UMTS network 100. In order to switch circuit switched traffic to the right location in the network, they are connected to location databases, such as, in this case, the HSS 104.

In the UTRAN in figure 1, consisting of an RNC (Radio Network Controllers) 107 of which several can be present, a BSC 106 (Base Station Controllers), a BTS 108 (Base Station Transceivers) and a Node B 109 of which normally many are present, switching, and setting up and releasing of RBs (Radio Bearers) for the mobile terminals is performed by the RNC. Node Bs are the UMTS equivalents to the BTSs in GSM/GPRS networks, although they operate on higher frequencies than their GSM/GPRS counterparts.
RNCs also have added intelligence compared to BSCs in GMS/GPRS networks which enables them to manage handover operations for mobile terminals independent of MSCs and SGSNs.

A dashed line 111 in figure 1 shows one example route along which data packets sent from a Packet Data Network 132 travel to the mobile terminal 110.

In the present invention, the services offered to the mobile terminal are those requiring an always connected scenario, such as PushToTalk, WeShare, IP telephony or streaming applications.

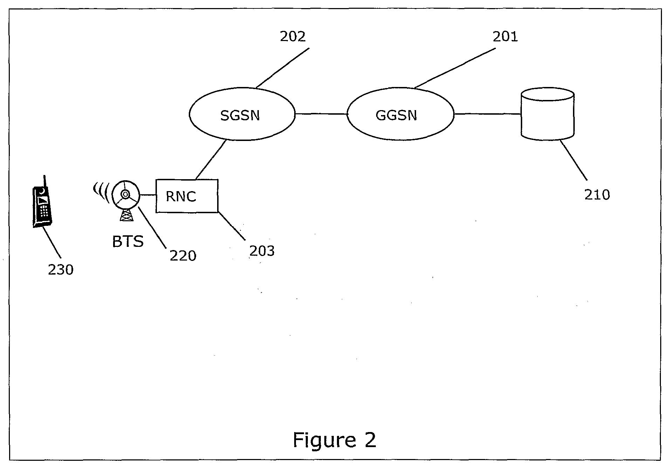

Figure 2 illustrates an embodiment of a node (GGSN - Gateway GPRS Support Node) 201 in a UMTS mobile communication network communicating with other nodes (SGSN - Serving GPRS Support Node, RNC - Radio Network Controller) 202, 203 and a server 210 located in a packet switched data network outside the mobile communication network.
The server 210 provides different services to the mobile terminal which, for example, are services requiring an "always connected" state from the mobile terminal or are services where the time factor for the delivery of the service is critical, such as a streaming applications, PushToTalk, IP telephony, WeShare and other applications with similar connection requirements.

The GGSN 201 in this embodiment performs the function of an edge router seen from the perspective of networks connected to the mobile communication network in figure 2 and is responsible for storing the old QoS profile for bearers that have been released for later usage and to reactivate them when the bearer released has been re-established. This is done in corporation between GGSN 201 and SGSN 202.
Creation of a new RABs is handled by the RNC 203 upon request from the SGSN 202. During the time it takes to re-establish a released RAB the GGSN tries to find a GTP-U tunnel with the same destination address (PDP address) as for the released GTP-U tunnel. If such a GTP-U tunnel is found, the GGSN 201 forwards all subsequent data coming from the server 210 through this tunnel to the SGSN 202. The SGSN 202 swiches the received GTP packets to the corresponding GTP tunnel on the lu interface.

However, in cases where the mobile terminal 110 has more than one PDP-address associated to it, the GGSN 201 can also look for GTP-U tunnels, which have one of the destination PDP addresses of the mobile terminal 110, but which need not be identical to the PDP address of the released GTP-U tunnel.

Normally, there are different classes of RAB with different requirements for the transport of data traffic. In this case, the RAB utilized by the SGSN 202 for transporting data traffic to the mobile terminal 230 is of the type interactive. This class carries best effort traffic, where the bandwidth requirements are negotiable. In the Release 99 specification for the UMTS network by the 3GPP (Third Generation Partnership Project), the maximum bandwidth at disposal is about 2 Mbit/s on such a RAB, while in the later Release 5 it can be up to 16 Mbit/s.

At a later point, when the SGSN 202 has negotiated a reestablishment of the previously released RAB with the RNC 203 and the mobile terminal 230, the new connection state of the bearer is signalled to the GGSN 201. After the connection is re-established, all subsequent data packets from the server 210 and belonging to the service which was provided on that radio and Core Network bearer, are forwarded onto the re-established and previously released bearer. The GGSN 201 may connect a TFT to the re-established bearer.

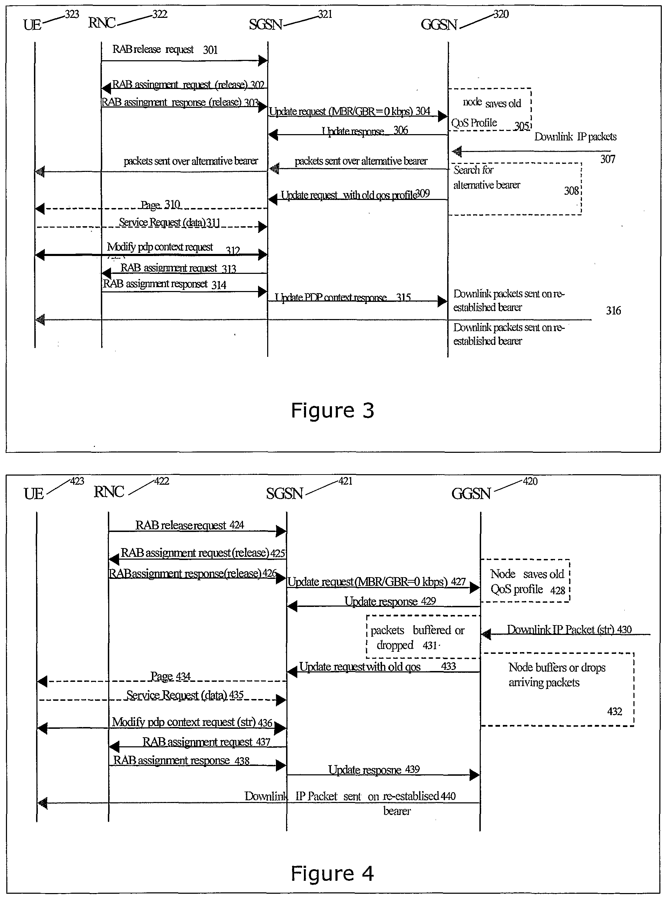

Figure 3 shows the signalling between the two nodes of the mobile communication network and the mobile terminal when the RAB which the mobile terminal is using, is put into preserved state by the network due to the reception of a CS call at the MT (mobile terminal), inactivity, loss of coverage or some other cause.

First, a RAB release request 301 sent from the RNC (Radio Network Controller) 322 is received by the SGSN 321. After a RAB assignment request 302 (request for the release of the RAB) is sent from the SGSN 321 to the RNC 322, it is answered by a RAB assignment response 303 sent out by the RNC 322. This step completes the release of the RAB.
Thereafter, an update for the QoS parameters is sent in the form of an update request 304 with at least MBR (MBR - Maximum Bitrate) parameters set to 0 kbps from the SGSN 321 to the GGSN 320, while other QoS parameters may or may not change. The GGSN disables the current qos profile (old QoS profile) for the bearer and replaces it with a new SGSN requested one. The old QoS profile is stored 305 by the GGSN 320 for later usage when downlink packets arrive, which are to be send on the preserved bearer.

Given that downlink data packets arrive at the GGSN for the bearer in the preserved state the following sequence is executed:
First, a GTP-U tunnel with the same destination PDP address as the preserved bearer is sought by the GGSN 320 (not shown). After a bearer is found, downlink packets are temporarily sent on that newly found GTP-U tunnel from the GGSN to the SGSN.

As already mentioned before, when the mobile terminal UE 323 has more than one PDP address associated to it, the GGSN 320 may also look for GTP-U tunnels with destination PDP addresses which are different from the one associated with the preserved bearer, but which match one of the PDP addresses of the mobile terminal UE 323.

In figure 3, this procedure is shown as "Downlink IP packet on primary" 307 sent from the GGSN 320 to the SGSN 321. Further the downlink packets are switched by the SGSN, to the corresponding GTP-U tunnel on lu for transfer to the RNC. At this point, it is worth mentioning, that the temporarily packet forwarding over an alternative bearer is hardly noticeable from the end user perspective.

Next, an Update PDP Context Request 309 is sent by the GGSN 320 with the stored QoS profile to the SGSN 321.

The following sequence 309 is defined in 3GPP (Third Generation Partnership Project) by GGSN initiated PDP-context modification:
If the lu connection, which is the interface between the UTRAN (Universal Terrestrial Radio Access Network) and the core network, has been released, a page 310 to the mobile terminal (UE) 323 is sent by the SGSN 321 and the mobile terminal (UE) 323 answers with a service request 311.
When a service request 311 is received from the mobile terminal 323, the reestablishment of the released RAB is signaled with the UTRAN (Universal Terrestrial Radio Access Network). The steps are explained below.

First, a modify PDP context request 312 is sent by the SGSN 321 to the mobile terminal 323 with the upgraded QoS parameters. In the next step, a reactivation of the released RAB is requested from the RNC (Radio Network Controller) by sending a RAB assignment request 313 from SGSN 321 to the RNC 322 (Radio Network Controller) and after that the upgraded QoS are acknowledged to the GGSN 320 in an update PDP Context Response 315.

After reception of the Update PDP Context Response 315 downlink packets sent temporarily on an alternative bearer are forwarded on the restored bearer indicated in figure 3 as "Downlink IP Packet sent on a secondary PDP 316. If a TFT is associated with the restored bearer, the GGSN may re-enable it (not shown) and packets are forwarded over the restored bearer.

Turning now to figure 4, a different signalling and payload scenario is shown, where the GGSN during the step of searching for a GTP-U tunnel with the same PDP address as the preserved bearer,is unable to find a GTP-U tunnel with the same PDP address.

In that case, all downlink packets are either buffered or dropped at 431 until the preserved bearer is restored at 439. The restoration procedure for the RAB previously released by the mobile terminal starts with the update request with the saved old QoS profile sent from the GGSN to the SGSN at 433. The ensuing steps 434-438, where signalling is taking place between the SGSN and the mobile terminal, are identical with the already described steps 310-314 illustrated in figure 3 before and will therefore not be explained.

As already mentioned, the above step of searching for a GTP-U tunnel with the same PDP address as the preserved bearer can alternatively include searching for a GTP-U tunnel with a destination address different from the preserved bearer, when the mobile terminal UE (323) has more than one PDP address associated with it.

When, in the final step of the RAB reestablishment procedure, an update PDP context message has been received at the GGSN, the data packets previously buffered and all subsequent packets aimed for the re-established bearer are sent on the re-established bearer. Packets are traversed over the newly modified bearer between the GGSN and SGSN and then over the corresponding bearer between the SGSN and RNC.

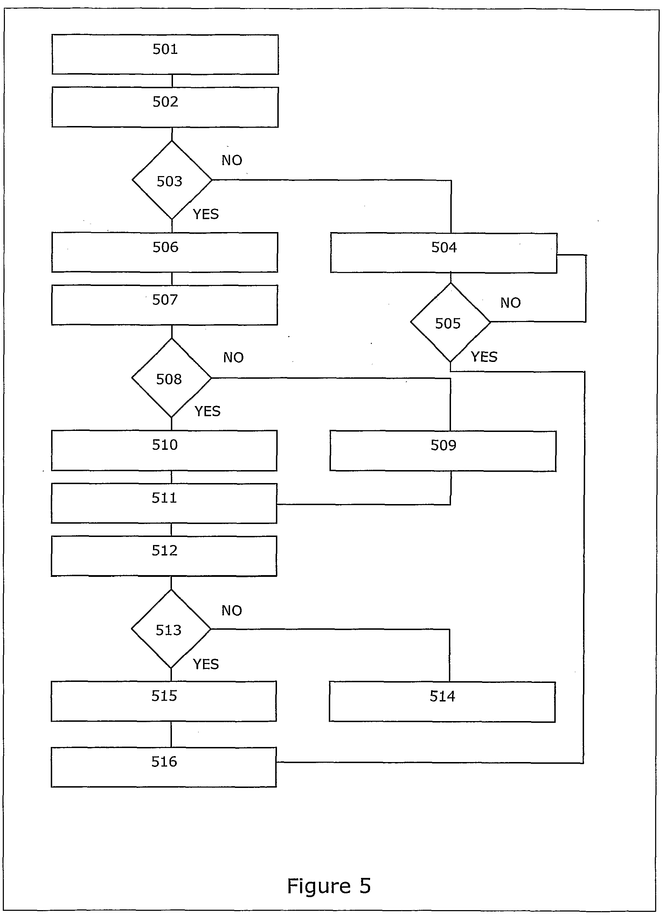

Turning now to figure 5, different steps of the method according to the present invention exemplified by the embodiments in figures 3 and 4 will be described, which may be implemented in both hardware and software (e.g. as instruction sets in a computer program).

The hardware implementation can be done on integrated circuits, such as an ASIC, a ROM circuit, an EPROM, a FLASH memory and so on, while the software implementation can be done by on a medium storing the computer program, such as a compact disc, a digital video disc, a memory stick, a hard drive or other media suitable for storing the computer program.

At step 501, an instruction set is provided, which receives information from the mobile communication network that a RAB has been released due to for example inactivity, or moving out of coverage, or an incoming CS call.

At the next step 502, a further part of the computer program in the form of instruction sets saves the old QoS profile for the released bearer for later usage. Possible QoS parameters could for example be MBR (Maximum Bit-Rate) or GBR (Guaranteed Bit-Rate) or some other parameter.
Thereafter, at step 503, a further instruction set belonging to the computer program examines whether there exist alternative GTP-U tunnels which have the same PDP (Packet Data Protocol) address as the released bearer.

PDP addresses are similar to IP addresses in packet-switched networks, such as the Internet. Of course, any other form of destination address is contemplated by the invention, such as IP addresses according to the IPv4, IPv6 or IPV6.1 specification, X.25 addresses and others.

Optionally, the instruction set at 503 may look for an alternative bearer which is not tied to a bearer descriptor. This bearer descriptor may, when the instruction set is applied to a UMTS network, be a TFT (Traffic Flow Template).

The function of TFTs in a UMTS network is to discriminate between different packet flows towards the same PDP address. It contains a set of one or more packet filters, such as QoS identifiers, IP header data, protocol identifiers and security related data. A GGSN uses a TFT to forward incoming data packets belonging to the same PDP address over different bearers.

Now, if in step 503 the instruction set belonging to the computer program has not been able to find a bearer, another instruction set starts buffering or dropping packets in steps 504, 505 until the bearer has been re-established.

When the bearer has been re-established, a different instruction set belonging to the computer program starts sending the buffered or all subsequent data packets are on the re-established bearer in step 515. In this case, it would entail tunnelling data packets from a network outside the mobile communication network through a GTP-U tunnel set up by the GGSN and corresponding to the released bearer to the SGSN. The SGSN would then untunnel the packets and forward them on the re-established RAB.

If on the other hand, the instruction set has found a bearer, another instruction set in step 506 starts to temporarily forward data packets on the bearer found. In detail this would mean that, when the data packets have been sent by the instruction set from the GGSN to the SGSN on a GTP-U tunnel, the instruction set swiches the packet to the corresponding tunnel and forwards it to the Radio Access Network (RAN).

Thereafter, at step 507, an instruction set belonging to the computer program above sends an update request with the old QoS Profile to the SGSN.
Now, the computer program above starts executing a routine for reestablishment of the RAB previously released.

At step 508, an instruction set belonging to the computer program checks whether or not the lu interface, that is the interface between the UTRAN (Universal Terrestrial Radio Access Network) and the core network, has been released.
If yes, another instruction set in step 510 sends a page to the mobile terminal and receives an answer from the terminal in the form of a service request.
In the case that the lu connection has not been released, the computer program proceeds directly to the instruction set at step 511.
At step 511, a set of instructions executes the routine for RAB reestablishment between the UTRAN and the SGSN.
Then, at step 512, an instruction set belonging to the computer program above, sends an update PDP context response to the GGSN.
The instruction set checks then at step 513 if a TFT (Traffic Flow Template) was associated with the re-established bearer. If a TFT had been associated with the bearer, it is re-activated 515, otherwise the flow continues at step 516.
Finally, at step 516, an instruction set being part of the computer program above, forwards all subsequent data packets intended for the released bearer on the re-established RAB.

## Claims

1. A method of providing services to a mobile terminal (110, 230) using radio resources in a mobile communication network (100) consisting of at least one first node (102, 201) and at least one second node (103, 202) belonging to said mobile communication network (100), said method comprising the steps:
a) storing traffic parameters for a released radio resource, wherein said stored traffic parameters are QoS, Quality of Service, parameters;
b) receiving subsequent data intended for said released radio resource; said method further being **characterized by** the steps:
c) searching for a radio resource different from said released radio resource;
d) sending said subsequent data intended for said released radio resource on said different radio resource;
e) sending a request for a logical association between said mobile terminal (110, 230) and said mobile communication network (100) together with an update request including the stored traffic parameters from said first node (102, 201) to a second node (103, 202) belonging to said mobile communication network (100);
f) re-establishing said released radio resource; and
g) forwarding said subsequent data on said re-established radio resource.

2. A method according to claim 1 **characterized by** said step of re-establishing said released radio resource further including re-enabling the traffic parameters associated with said released radio resource.

3. A method according to claim 1 **characterized by** said traffic parameter being a TFT, Traffic Flow Template.

4. A method according to claim 1 **characterized by**, when not finding said different radio service in step c), buffering or dropping information for said released radio resource until said released radio resource is re-established.

5. A method according to one of the aforementioned claims **characterized by** said step f) of re-establishing the released radio bearer entailing the sub steps:
e1) sending information from said second node (103, 202) to said mobile terminal (110, 230);
e2) forwarding said request for a logical association from said second node (103, 202) to the mobile terminal (110, 230);
e3) receiving an answer from said mobile terminal (110, 230); and
e4) sending a response to said request from said first node back to said first node (102, 201).

6. A method according to claim 5 **characterized by** said substeps further comprising sending updated traffic parameters to said mobile terminal (110, 230) at sub step
e2) and informing said first node (102, 201) of an establishment of a radio resource at sub step e4).

7. A method according to one of the aforementioned claims, where said radio resource is a RAB, Radio Access Bearer.

8. A method according to one of the aforementioned claims, where said first node (102, 201) is a GGSN, Gateway GPRS Support Node.

9. A method according to one of the aforementioned claims, where said second node (103, 202) is a SGSN, Serving GPRS Support Node.

10. A method according to one of the aforementioned claims, where said mobile communication network (100) is one of a UMTS, GSM/GPRS, GSM/EDGE, CDMA2000 or TD-SCDMA mobile communication networks.

11. A method according to one of the aforementioned claims, where said destination address is a PDP, Packed Data Protocol, address.

12. A method according to one of the aforementioned claims, where said logical association between said mobile terminal (110, 230) and said mobile communication network (100) is a PDP, Packed Data Protocol, context.

13. A mobile communication network (100) for providing a service using radio resources to a mobile terminal (110, 230), comprising a first (102, 201) and a second node (103, 202) belonging to said mobile communication network and a mobile terminal (110, 230); said first node (102, 201) being adapted to store traffic parameters for a released radio resource and to receive subsequent data intended for said released radio resource, wherein said stored traffic parameters are QoS, Quality of Service, parameters;
the mobile communication network further **characterized by**:
said first node (102, 201) further being adapted to search for a radio resource different from said released radio resource and to send said subsequent data intended for said released radio resource on said different radio resource;
said first node (102, 201) further being adapted to send a request for a logical association between said mobile terminal (110, 230) and said mobile communication network (100) together with an update request including the stored traffic parameters to a second node (103, 202) belonging to said mobile communication network (100);
said second node (103, 202) being adapted to re-establish said released radio resource and said first node (102, 201) being adapted to forward subsequent data on said re-established radio resource via said first node (102, 201).

14. A computer program product for providing services to a mobile terminal (110, 230) using radio resources in a mobile communication network:
said computer program providing instruction sets for:
a) receiving information about a released radio resource;
b) storing traffic parameters for said released radio resource (502) in a first node (102, 201) belonging to said mobile communication network, wherein said stored traffic parameters are QoS, Quality of Service, parameters;
c) receiving subsequent information for said released radio resource; said computer program further **characterized by**:
d) searching for a radio resource different from said released radio resource;
e) sending said subsequent information for said released radio resource on said different radio resource;
f) sending a request for a logical association between said mobile terminal (110, 230) and said mobile communication network (100) together with an update request including the stored traffic parameters from said first node (102, 201) to a second node (103, 202) belonging to said mobile communication network (100);
g) re-establishing said released radio resource; and
h) forwarding subsequent information on said re-established radio resource via said first node (102, 201).

## Patentansprüche

1. Verfahren zum Bereitstellen von Diensten für ein mobiles Endgerät (110, 230) unter Verwendung von Funkressourcen in einem mobilen Kommunikationsnetz (100), das aus mindestens einem ersten Knoten (102, 201) und mindestens einem zweiten Knoten (103, 202) besteht, die dem mobilen Kommunikationsnetz (100) angehören, wobei das Verfahren die folgenden Schritte umfasst:
a) Speichern von Verkehrsparametern für eine freigegebene Funkressource, worin die gespeicherten Verkehrsparameter QoS(Dienstgüte)-Parameter sind;
b) Empfangen von nachfolgenden Daten, die für die freigegebene Funkressource gedacht sind;
wobei das Verfahren außerdem durch die folgenden Schritte gekennzeichnet ist:
c) Suchen nach einer Funkressource, die von der freigegebenen Funkressource verschieden ist;
d) Senden der nachfolgenden Daten, die für die freigegebene Funkressource gedacht sind, auf der verschiedenen Funkressource;
e) Senden einer Anforderung für eine logische Assoziation zwischen dem mobilen Endgerät (110, 230) und dem mobilen Kommunikationsnetz (100), zusammen mit einer Aktualisierungsanforderung einschließend die gespeicherten Verkehrsparameter vom ersten Knoten (102, 201) an einen zweiten Knoten (103, 202), der dem mobilen Kommunikationsnetz (100) angehört;
f) Wiederherstellen der freigegebenen Funkressource; und
g) Weiterleiten der nachfolgenden Daten auf der wiederhergestellten Funkressource.

2. Verfahren nach Anspruch 1, **dadurch gekennzeichnet, dass** der Schritt des Wiederherstellens der freigegebenen Funkressource außerdem einschließt, dass die mit der freigegebenen Funkressource assoziierten Verkehrsparameter reaktiviert werden.

3. Verfahren nach Anspruch 1, **dadurch gekennzeichnet, dass** der Verkehrsparameter eine Verkehrsflussschablone, TFT, ist.

4. Verfahren nach Anspruch 1, **dadurch gekennzeichnet, dass**, wenn der verschiedene Funkdienst in Schritt c) nicht gefunden wird, Information für die freigegebene Funkressource gepuffert oder gelöscht wird, bis die freigegebene Funkressource wiederhergestellt ist.

5. Verfahren nach einem der vorhergehenden Ansprüche, **dadurch gekennzeichnet, dass** der Schritt f) des Wiederherstellens des freigegebenen Funkträgers, die folgenden Unterschritte nach sich zieht:
e1) Senden von Information vom zweiten Knoten (103, 202) an das mobile Endgerät (110, 230);
e2) Weiterleiten der Anforderung für eine logische Assoziation vom zweiten Knoten (103, 202) an das mobile Endgerät (110, 230);
e3) Empfangen einer Antwort vom mobilen Endgerät (110, 230); und
e4) Senden einer Antwort auf die Anforderung vom ersten Knoten zurück an den ersten Knoten (102, 201).

6. Verfahren nach Anspruch 5, **dadurch gekennzeichnet, dass** die Unterschritte außerdem umfassen: Senden von aktualisierten Verkehrsparametern an das mobile Endgerät (110, 230) im Unterschritt e2) und Informieren des ersten Knotens (102, 201) über einen Aufbau einer Funkressource in Unterschritt e4).

7. Verfahren nach einem der vorhergehenden Ansprüche, wo die Funkressource ein Funkzugangsträger, RAB, ist.

8. Verfahren nach einem der vorhergehenden Ansprüche, wo der ersten Knoten (102, 201) ein Gateway-GSN(GPRS-Unterstützungsknoten) ist.

9. Verfahren nach einem der vorhergehenden Ansprüche, wo der zweite Knoten (103, 202) ein S(versorgender)GSN(GPRS-Unterstützungsknoten) ist.

10. Verfahren nach einem der vorhergehenden Ansprüche, wo das mobile Kommunikationsnetz (100) eins von Folgenden ist: UMTS, GSM/GPRS, GSM/EDGE, CDMA2000 oder TD-SCDMA mobile Kommunikationsnetze.

11. Verfahren nach einem der vorhergehenden Ansprüche, wo die Zieladresse eine PDP(Paketdatenprotokoll)-Adresse ist.

12. Verfahren nach einem der vorhergehenden Ansprüche, wo die logische Assoziation zwischen dem Mobilendgerät (110, 230) und dem mobilen Kommunikationsnetz (100) ein PDP(Paketdatenprotokoll)-Kontext ist.

13. Mobiles Kommunikationsnetz (100) zum Bereitstellen eines Dienstes unter Verwendung von Funkressourcen für ein mobiles Endgerät (110, 230), einen ersten (102, 201) und einen zweiten Knoten (103, 202) umfassend, die dem mobilen Kommunikationsnetz angehören, und ein mobiles Endgerät (110, 230);
wobei der erste Knoten (102, 201) dazu angepasst ist, Verkehrsparameter für eine freigegebene Funkressource zu speichern und nachfolgende Daten zu empfangen, die für die freigegebene Funkressource gedacht sind, worin die gespeicherten Verkehrsparameter QoS(Dienstgüte)-Parameter sind;
wobei das mobile Kommunikationsnetz außerdem **dadurch gekennzeichnet ist, dass**:
der erste Knoten (102, 201) außerdem dazu angepasst ist, eine Funkressource zu suchen, die von der freigegebenen Funkressource verschieden ist, und die nachfolgenden Daten, die für die freigegebene Funkressource gedacht sind, auf der verschiedenen Funkressource zu senden;
der erste Knoten (102, 201) außerdem dazu angepasst ist, eine Anforderung für eine logische Assoziation zwischen dem mobilen Endgerät (110, 230) und dem mobilen Kommunikationsnetz (100) zusammen mit einer Aktualisierungsanforderung einschließend die gespeicherten Verkehrsparameter an einen zweiten Knoten (103, 202) zu senden, der dem mobilen Kommunikationsnetz (100) angehört;
der zweite Knoten (103, 202) dazu angepasst ist, die freigegebene Funkressource wiederherzustellen und der erste Knoten (102, 201) dazu angepasst ist, nachfolgende Daten auf der wiederhergestellten Funkressource über den ersten Knoten (102, 201) weiterzuleiten.

14. Computerprogrammprodukt zum Bereitstellen von Diensten an ein mobiles Endgerät (110, 230) unter Verwendung von Funkressourcen in einem mobilen Kommunikationsnetz:
wobei das Computerprogramm Befehlssätze bereitstellt zum:
a) Empfangen von Information über eine freigegebene Funkressource;
b) Speichern von Verkehrsparametern für die freigegebene Funkressource (502) in einem ersten Knoten (102, 201), der dem mobilen Kommunikationsnetz angehört, worin die gespeicherten Verkehrsparameter QoS(Dienstgüte)-Parameter sind;
c) Empfangen von nachfolgender Information für die freigegebene Funkressource;
wobei das Computerprogramm außerdem **gekennzeichnet ist durch**:
d) Suchen nach einer Funkressource, die von der freigegebenen Funkressource verschieden ist;
e) Senden der nachfolgenden Information für die freigegebene Funkressource auf der verschiedenen Funkressource;
f) Senden einer Anforderung für eine logische Assoziation zwischen dem mobilen Endgerät (110, 230) und dem mobilen Kommunikationsnetz (100), zusammen mit einer Aktualisierungsanforderung einschließend die gespeicherten Verkehrsparameter vom ersten Knoten (102, 201), an einen zweiten Knoten (103, 202), der dem mobilen Kommunikationsnetz (100) angehört;
g) Wiederherstellen der freigegebenen Funkressource; und
h) Weiterleiten der nachfolgenden Information auf der wiederhergestellten Funkressource über den ersten Knoten (102, 201).

## Revendications

1. Procédé de fourniture de services à un terminal mobile (110, 230), en utilisant des ressources radio dans un réseau de communication mobile (100) constitué d'au moins un premier noeud (102, 201) et d'au moins un second noeud (103, 202) appartenant audit réseau de communication mobile (100), ledit procédé comprenant les étapes ci-dessous consistant à :
a) stocker des paramètres de trafic pour une ressource radio libérée, dans lequel lesdits paramètres de trafic stockés sont des paramètres de qualité de service, QoS ;
b) recevoir des données subséquentes destinées à ladite ressource radio libérée ;
ledit procédé étant en outre **caractérisé par** les étapes ci-dessous consistant à :
c) rechercher une ressource radio différente de ladite ressource radio libérée ;
d) envoyer lesdites données subséquentes destinées à ladite ressource radio libérée sur ladite ressource radio différente ;
e) envoyer une demande concernant une association logique entre ledit terminal mobile (110, 230) et ledit réseau de communication mobile (100) conjointement avec une demande de mise à jour incluant les paramètres de trafic stockés, dudit premier noeud (102, 201) à un second noeud (103, 202) appartenant audit réseau de communication mobile (100) ;
f) rétablir ladite ressource radio libérée ; et
g) acheminer lesdites données subséquentes sur ladite ressource radio rétablie.

2. Procédé selon la revendication 1, **caractérisé en ce que** ladite étape de rétablissement de ladite ressource radio libérée consiste en outre à réactiver les paramètres de trafic associés à ladite ressource radio libérée.

3. Procédé selon la revendication 1, **caractérisé en ce que** ledit paramètre de trafic est un modèle de flux de trafic, TFT.

4. Procédé selon la revendication 1, **caractérisé par** l'étape ci-après consistant à, lorsque ladite ressource radio différente n'est pas trouvée à l'étape c), mettre en mémoire tampon ou abandonner des informations pour ladite ressource radio libérée, jusqu'à ce que ladite ressource radio libérée soit rétablie.

5. Procédé selon l'une quelconque des revendications précédentes, **caractérisé en ce que** ladite étape f) de rétablissement de la porteuse radio libérée implique les sous-étapes ci-dessous consistant à :
e1) envoyer des informations, dudit second noeud (103, 202) audit terminal mobile (110, 230) ;
e2) acheminer ladite demande concernant une association logique, dudit second noeud (103, 202) au terminal mobile (110, 230) ;
e3) recevoir une réponse en provenance dudit terminal mobile (110, 230) ; et
e4) renvoyer une réponse à ladite demande en provenance dudit premier noeud audit premier noeud (102, 201).

6. Procédé selon la revendication 5, **caractérisé en ce que** lesdites sous-étapes consistent en outre à envoyer des paramètres de trafic mis à jour audit terminal mobile (110, 230) au cours de la sous-étape e2), et à informer ledit premier noeud (102, 201) d'un établissement d'une ressource radio au cours de la sous-étape e4).

7. Procédé selon l'une quelconque des revendications précédentes, où ladite ressource radio est une porteuse d'accès radio, RAB.

8. Procédé selon l'une quelconque des revendications précédentes, dans lequel ledit premier noeud (102, 201) est un noeud de support GPRS de transit, GGSN.

9. Procédé selon l'une quelconque des revendications précédentes, dans lequel ledit second noeud (103, 202) est un noeud de support du GPRS de desserte, SGSN.

10. Procédé selon l'une quelconque des revendications précédentes, dans lequel ledit réseau de communication mobile (100) est l'un parmi un réseau de communication mobile UMTS, GSM/GPRS, GSM/EDGE, CDMA2000 ou TD-SCDMA.

11. Procédé selon l'une quelconque des revendications précédentes, dans lequel ladite adresse de destination est une adresse de protocole de données en paquets, PDP.

12. Procédé selon l'une quelconque des revendications précédentes, dans lequel ladite association logique entre ledit terminal mobile (110, 230) et ledit réseau de communication mobile (100) est un contexte de protocole de données en paquets, PDP.

13. Réseau de communication mobile (100) pour fournir un service en utilisant des ressources radio à un terminal mobile (110, 230), comprenant un premier noeud (102, 201) et un second noeud (103, 202) appartenant audit réseau de communication mobile et un terminal mobile (110, 230) ;
ledit premier noeud (102, 201) étant apte à stocker des paramètres de trafic pour une ressource radio libérée, et à recevoir des données subséquentes destinées à ladite ressource radio libérée, dans lequel lesdits paramètres de trafic stockés sont des paramètres de qualité de service, QoS ;
le réseau de communication mobile étant en outre **caractérisé en ce que** :
ledit premier noeud (102, 201) est en outre apte à rechercher une ressource radio différente de ladite ressource radio libérée, et à envoyer lesdites données subséquentes destinées à ladite ressource radio libérée sur ladite ressource radio différente ;
ledit premier noeud (102, 201) est en outre apte à envoyer une demande concernant une association logique entre ledit terminal mobile (110, 230) et ledit réseau de communication mobile (100) conjointement avec une demande de mise à jour incluant les paramètres de trafic stockés, à un second noeud (103, 202) appartenant audit réseau de communication mobile (100) ;
ledit second noeud (103, 202) est apte à rétablir ladite ressource radio libérée et ledit premier noeud (102, 201) est apte à acheminer des données subséquentes sur ladite ressource radio rétablie par l'intermédiaire dudit premier noeud (102, 201).

14. Produit-programme informatique pour fournir des services à un terminal mobile (110, 230) en utilisant des ressources radio dans un réseau de communication mobile :
ledit programme informatique fournissant des ensembles d'instructions pour :
a) recevoir des informations concernant une ressource radio libérée ;
b) stocker des paramètres de trafic pour ladite ressource radio libérée (502) dans un premier noeud (102, 201) appartenant audit réseau de communication mobile, dans lequel lesdits paramètres de trafic stockés sont des paramètres de qualité de service, QoS ;
c) recevoir des informations subséquentes destinées à ladite ressource radio libérée ;
ledit programme informatique étant en outre **caractérisé par** les étapes ci-dessous consistant à :
d) rechercher une ressource radio différente de ladite ressource radio libérée ;
e) envoyer lesdites informations subséquentes destinées à ladite ressource radio libérée sur ladite ressource radio différente ;
f) envoyer une demande concernant une association logique entre ledit terminal mobile (110, 230) et ledit réseau de communication mobile (100) conjointement avec une demande de mise à jour incluant les paramètres de trafic stockés, dudit premier noeud (102, 201) à un second noeud (103, 202) appartenant audit réseau de communication mobile (100) ;
g) rétablir ladite ressource radio libérée ; et
h) acheminer des informations subséquentes sur ladite ressource radio rétablie par l'intermédiaire dudit premier noeud (102, 201).
